# EUROPEAN PATENT APPLICATION

(11) **EP 2 642 806 A1**
(43) Date of publication of application: **25.09.2013**
(21) Application number: 13160034.8
(22) Date of filing: 19.03.2013
(51) Int. Cl.: H04W 64/00, G01S 5/02

(54) **Method for providing a location search service and an electronic device thereof**

(30) Priority: 20.03.2012 KR 20120028300
(71) Applicant: Samsung Electronics Co., Ltd, Gyeonggi-do 443-742 (KR)
(72) Inventor: Park, Jeong-Min, Gyeonggi-do (KR)
(74) Representative: Nederlandsch Octrooibureau

(57) **Abstract**

A method for performing a location search in an electronic device includes estimating a current location of the electronic device, measuring an altitude of the electronic device, searching for an altitude of a topographic feature corresponding to the estimated current location, comparing the searched altitude and the measured altitude to determine whether the electronic device is located at the topographic feature, and determining the current location of the electronic device according to the determination result.

## Description

### BACKGROUND OF THE INVENTION

### 1. Field of the Invention

The present invention relates generally to an electronic device, and in particular, to a method and device for providing a location search service in an electronic device.

### 2. Description of the Related Art

Recently, electronic devices have been rapidly developed, and electronic devices capable of wireless voice calls and data exchange have become the necessities of life. At the early beginnings of electronic devices, such devices were simply recognized as portable devices capable of providing a wireless call service. However, due to the development of technologies and the introduction of wireless Internet, electronic devices have evolved into multimedia devices having various functions such as scheduling, gaming, remote control functionality, and image photographing in order to satisfy users' demands.

In particular, electronic devices supporting a location-based service (LBS) have recently been launched. The recent electronic devices provide a location search service by using schemes such as a global positioning system (GPS) and a WiFi positioning system (WPS). However, since a GPS-based location search scheme uses information about a distance from a satellite sent to an electronic device, it is difficult for the GPS-based location search scheme to search for location information of an indoor electronic device. On the other hand, a WPS-based location search scheme can search for location information of an indoor electronic device, but it is difficult for the WPS-based location search scheme to search for accurate location information of an electronic device in an area with few WiFi access points (APs), because an error range is large in the area.

### SUMMARY OF THE INVENTION

Objects of the present invention are to substantially solve at least the above problems and/or disadvantages and to provide at least the advantages below. Accordingly, an object of the present invention is to provide a method and device for providing a location search service in an electronic device.

Another object of the present invention is to provide a method and device for searching for a current location of an electronic device by using altitude information.

Yet another object of the present invention is to provide a method and device for correcting a current location of an electronic device by using altitude information.

According to an aspect of the present invention, a method for performing a location search in an electronic device includes: estimating a current location of the electronic device; measuring an altitude of the electronic device; searching for an altitude of a topographic feature corresponding to the estimated current location; comparing the searched altitude and the measured altitude to determine whether the electronic device is located at the topographic feature; and setting the current location of the electronic device according to the determination result.

According to another aspect of the present invention, an device for performing a location search in an electronic device includes: at least one processor; a memory unit; and at least one software module stored in the memory unit and executed by the at least one processor, wherein the software module estimates a current location of the electronic device, measures altitude information of the electronic device, searches for altitude information of a topographic feature corresponding to the estimated current location, compares the searched altitude information and the measured altitude information to determine whether the electronic device is located within the topographic feature, and sets the current location of the electronic device according to the determination result.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a block configuration of an electronic device according to an exemplary embodiment of the present invention;
FIG. 2A is a diagram illustrating a process of providing a location search service in the electronic device according to the exemplary embodiment of the present invention;
FIG. 2B is a diagram illustrating a process of providing the location search service in the electronic device according to an alternative exemplary embodiment of the present invention;
FIGS. 3A to 3C are diagrams illustrating a method of determining a current location of the electronic device by using altitude information according to the exemplary embodiment of the present invention;
FIG. 4 is a diagram illustrating a method of determining the current location of the electronic device by using an order of priority according to the alternative exemplary embodiment of the present invention; and
FIG. 5 is a diagram illustrating a method of determining a current floor of the electronic device in a building by using altitude information according to the alternative exemplary embodiment of the present invention.

### DETAILED DESCRIPTION OF THE INVENTION

Exemplary embodiments of the present invention will be described herein below with reference to the accompanying drawings. In the following description, detailed descriptions of well-known functions or configurations will be omitted since they would unnecessarily obscure the subject matters of the present invention. The present invention may, however, be embodied in many different forms and should not be construed as limited to the exemplary embodiments set forth herein. Also, the terms used herein are defined according to the functions of the present invention. Thus, the terms may vary depending on users' or operators' intentions or practices. Therefore, the terms used herein should be understood based on the descriptions made herein. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

In the following description, examples of an electronic device include a mobile terminal, a smart phone, a tablet personal computer (PC), a navigation device, and an MP3 player that are capable of location information search.

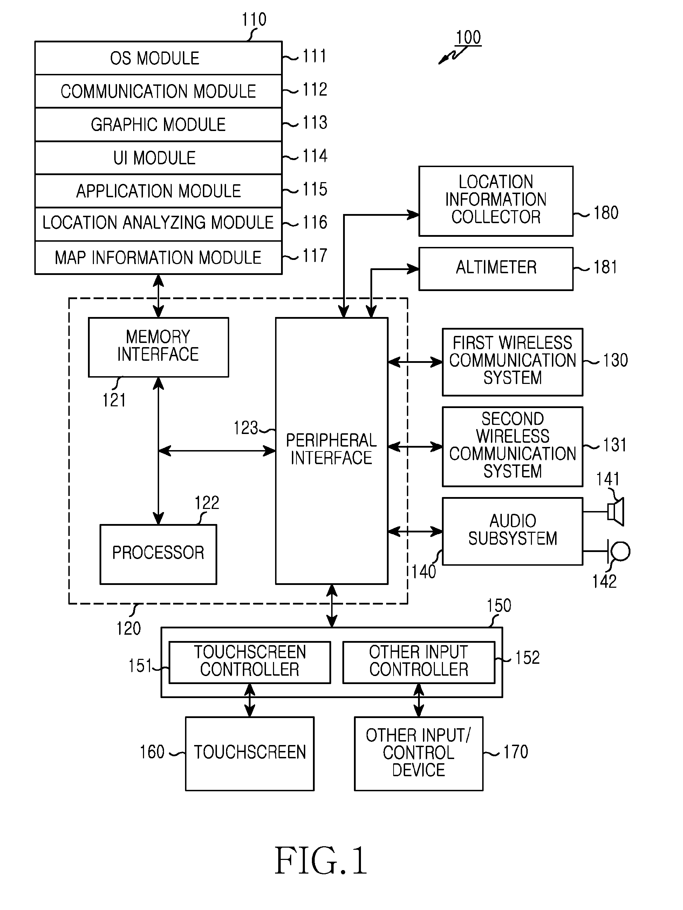

FIG. 1 illustrates a block configuration of an electronic device according to an exemplary embodiment of the present invention.

Referring to FIG. 1, an electronic device 100 according to the exemplary embodiment of the present invention includes a memory unit 110, a processor unit 120, a first wireless communication system 130, a second wireless communication system 131, an audio subsystem 140, a speaker 141, a microphone 142, an input/output (I/O) system 150, a touch screen 160, an other input/control device 170, a location information collector 180, and an altimeter 181. The memory unit 110 may include a plurality of memories.

The processor unit 120 may include a memory interface 121, at least one processor 122, and a peripheral interface 123. In some cases, the processor unit 120 will also be referred to as a processor. The memory interface 121 may be separate from the processor 122 and/or the peripheral interface 123, or may be integrated into at least one integrated circuit.

The processor 122 executes various software programs to perform various functions for the electronic device 100, and performs processes and controls for voice communication and data communication. In addition to these general functions, the processor 122 executes a software module, which may be an instruction set stored in the memory unit 110, and performs various functions corresponding to the software module.

The peripheral interface 123 connects various peripheral devices and the I/O system 150 of the electronic device 100 to the processor 122 and the memory unit 110, for example, through the memory interface 121.

The various elements of the electronic device 100 may be coupled by at least one communication bus or stream line or path for data streaming, which are illustrated by the arrows and connections between components in FIG. 1.

The wireless communication systems 130, 131 may include a radio frequency (RF) receiver and transceiver and/or an optical and/or infrared receiver and transceiver. The first wireless communication system 130 and the second wireless communication system 131 may be divided according to communication networks supported by the electronic device 100. For example, the electronic device 100 may include each of the wireless communication systems 130, 131 for supporting a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a WiFi network, a WiMax network, and/or a Bluetooth network. The wireless communication systems 130, 131 according to the exemplary embodiment of the present invention are not limited to a wireless communication system supporting the above networks, but may also be any known wireless communication system supporting other networks. However, according to the exemplary embodiment of the present invention, at least one of the first wireless communication system 130 and the second wireless communication system 131 may support a wireless LAN. For example, one of the first wireless communication system 130 and the second wireless communication system 131 may operate through a WiFi network. The first wireless communication system 130 and the second wireless communication system 131 may be integrated into one wireless communication system.

The audio subsystem 140 is connected to the speaker 141 and the microphone 142 to perform voice recognition, voice replication, digital recording, phone functions, and audio streaming input/output functions. Specifically, the audio subsystem 140 is configured to output audio signals through the speaker 141 and input audio signals of a user through the microphone 142. The audio subsystem 140 receives data streams through the peripheral interface 123 of the processor unit 120, converts the data streams into electric signals, and transmits the electric signals to the speaker 141. The audio subsystem 140 receives electric signals from the microphone 142, converts the electric signals into audio data streams, and transmits the audio data streams to the peripheral interface 123. The audio subsystem 140 may include an attachable/detachable earphone, a headphone, and/or a headset. The speaker 141 converts electric signals received from the audio subsystem 140 into sound waves audible by humans and outputs the sound waves. The microphone 142 converts sound waves received from humans or other sound sources into electric signals.

In the present invention, the audio subsystem 140 may receive a data stream, indicating a current location of the electronic device 100, from the peripheral interface 123 of the processor unit 120, convert the data stream into an electric signal, and output the electric signal to the speaker 141.

The I/O system 150 may include a touch screen controller 151 and/or an other input controller 152. The touch screen controller 151 may be connected to the touch screen 160. The touch screen 160 and the touch screen controller 151 may detect a touch, a motion, or a stop thereof by using multi-touch detection technologies including a proximity sensor array or other elements, as well as capacitive, resistive, infrared and surface acoustic wave technologies for determining one or more touch points with the touch screen 160. The other input controller 152 may connected to the other input/control device 170. The other input/control device 170 may include one or more volume up/down buttons. The buttons may be push buttons, rocker buttons, or the like. The other input/control device 170 may also include a rocker switch, a thumb wheel, a dial, a stick, and/or a pointer device such as a stylus.

The touch screen 160 provides an I/O interface between the electronic device 100 and the user. That is, the touch screen 160 provides an interface for a user touch input/output. Specifically, the touch screen 160 transmits a user touch input to the electronic device 100, and displays an output from the electronic device 100 to the user. In addition, the touch screen 160 provides a visual output to the user. The visual output may be represented by a text, a graphic, a video, or a combination thereof. The touch screen 160 may use various display technologies. For example, the touch screen 160 may use a liquid crystal display (LCD), a Light Emitting Diode (LED), a light emitting polymer display (LPD), an Organic Light Emitting Diode (OLED), an Active Matrix Organic Light Emitting Diode (AMOLED), and/or a Flexible LED (FLED). However, the touch screen 160 is not limited to touch screens using the above display technologies.

In the present invention, the touch screen 160 may receive a map including a display of a current location of the electronic device 100 from a location analyzing module 116 and display the map. If the electronic device 100 does not include the touch screen 160, a separate display unit may be used to display a map including a display of a current location of the electronic device 100.

The memory 110 may be connected to the memory interface 121. The memory unit 110 may include one or more high-speed random-access memories (RAMs) such as magnetic disk storage devices, one or more nonvolatile memories, one or more optical storage devices, and/or one or more flash memories (e.g., NAND flash memories or NOR flash memories).

The memory unit 110 stores software and data. Elements of the software include an operation system (OS) module 111, a communication module 112, a graphic module 113, a user interface (UI) module 114, at least one application module 115, a location analyzing module 116, and a map information module 117. Since the module that is an element of the software may be represented as a set of instructions, the module may be referred to as an instruction set. The module may also be referred to as a program or application.

The memory unit 110 may store one or more modules including instructions for implementing the exemplary embodiments of the present invention.

The OS module 111 (e.g., WINDOWS, LINUX, Darwin, RTXC, UNIX, OS X, or an embedded OS such as VxWorks) includes various software elements for controlling general system operations. For example, general system operation controls include memory control/management, storage hardware and device control/management, and power control/management. The OS module 111 is configured to enable smooth communication between various hardware elements and devices and software elements and modules.

The communication module 112 may enable communication with other electronic devices such as computers, servers, and/or portable terminals through the first wireless communication system 130 or the second wireless communication system 131.

The graphic module 113 includes various software elements for displaying graphics on the touch screen 160. The graphics include texts, web pages, icons, digital images, videos, and animations. The graphic module 113 includes a control instruction for displaying current location information of the electronic device 100 estimated or determined by the location analyzing module 116 and map information, related to the current location information, on the touch screen 160. The map information may include various information elements constituting a map. Specifically, the map information may include road information of locations corresponding to respective latitude/longitude information, building information, topographic information, and altitude information of topographic features.

The UI module 114 includes various software elements related to a user interface. Specifically, the UI module 114 includes information about how the state of a user interface changes and/or information about under what conditions that the state of a user interface changes. The UI module 114 receives an input for performing a location search through the touch screen 160 or the other input/control device 170.

The application module 115 includes at least one of a browser application, an e-mail application, an instant message application, a word processing application, a keyboard emulation application, an address book application, a touch list application, a widget application, a digital rights management (DRM) application, a voice recognition application, a voice replication application, a position determining function application, a location-based service (LBS) application, and the like.

The location analyzing module 116 receives latitude/longitude information from the location information collector 180 and analyzes the received latitude/longitude information to estimate or determine a current location of the electronic device 100. Thereafter, the location analyzing module 116 searches the map information module 117 for altitude information of a topographic feature corresponding to the estimated or determined current location and determines whether the searched altitude information of the topographic feature satisfies altitude information of the electronic device 100 received from the altimeter 181. For example, when an altitude of the electronic device 100 is 15 m. and an altitude of a building corresponding to the current location of the electronic device 100 is 10 m., because the electronic device 100 with an altitude of 15 m. cannot be present in the building with an altitude of 10 m., the location analyzing module 116 determines that the altitude of the building corresponding to the current location does not satisfy the altitude of the electronic device 100.

It is to be understood that the electronic device 100 may be located in, near, on, under, adjacent, or substantially adjacent to any known topographic feature, such as a vehicle, a landmark, a body of water, a cave, a bridge, and/or any other known structures, natural formations, or existing topographic and/or geographic features not limited to buildings.

As another example, when an altitude of the electronic device 100 is -20 m. and an altitude of a building corresponding to the current location of the electronic device 100 is -10 m., because the electronic device 100 with an altitude of -20 m. cannot be present in the building with an altitude of -10 m., the location analyzing module 116 determines that the altitude of the building corresponding to the current location does not satisfy the altitude of the electronic device 100. On the other hand, when an altitude of the electronic device 100 is 10 m. and an altitude of a building corresponding to the current location of the electronic device 100 is 20 m., because the electronic device 100 with an altitude of 10 m. can be present in the building with an altitude of 20 m., the location analyzing module 116 determines that the altitude of the building corresponding to the current location satisfies the altitude of the electronic device 100.

When the searched altitude information of the topographic feature satisfies the altitude information of the electronic device 100 received from the altimeter 181, the location analyzing module 116 determines or sets the estimated current location as the current location of the electronic device 100 and transmits a map including a display of the current location of the electronic device 100 to the graphic module 113. When the searched altitude information of the topographic feature satisfies the altitude information of the electronic device 100, the electronic device 100 may determine the height of the electronic device 100 in the searched topographic feature, e.g., a floor of a building, based on the altitude information of the electronic device 100. In this case, in order to determine the floor of the building including the electronic device 100, the map information should include floor-by-floor height information of the topographic feature.

When the searched altitude information of the topographic feature does not satisfy the altitude information of the electronic device 100 received from the altimeter 181, the location analyzing module 116 searches the map information module 117 for altitude information and location information of adjacent topographic features corresponding to the estimated current location. In this case, the location analyzing module 116 searches for altitude information and location information of adjacent topographic features that are present within a predetermined location search range from the estimated current location. Thereafter, the location analyzing module 116 determines whether the searched location information of the adjacent topographic features is within a predetermined location search error range. Herein, the location search error range is a range extending radially from an estimated or determined latitude/longitude location, in which the electronic device 100 can actually be located, and may be predetermined according to a selection or control by the user or by the manufacturer of the electronic device 100.

When the searched location information of the adjacent topographic features is within the predetermined location search error range, the location analyzing module 116 determines whether there is an adjacent topographic feature satisfying the altitude information of the electronic device 100, among the adjacent topographic features present within the predetermined location search range. When there is an adjacent topographic feature satisfying the altitude information of the electronic device 100, the location analyzing module 116 corrects or sets the current location of the electronic device 100 from the estimated current location to a location of the adjacent topographic feature satisfying the altitude information of the electronic device 100, and transmits a map including a display of the corrected current location of the electronic device 100 to the graphic module 113.

In this case, when there are a plurality of adjacent topographic features satisfying the altitude information of the electronic device 100, among the adjacent topographic features present within the predetermined location search range, the electronic device 100 selects a topographic feature that is closest to the estimated current location among the adjacent topographic features satisfying the altitude information of the electronic device 100, and corrects or sets the current location of the electronic device 100 from the estimated current location to a location of the selected topographic feature.

In addition, when there are a plurality of adjacent topographic features that are located at the same distance while satisfying the altitude information of the electronic device 100, the electronic device 100 may select a topographic feature among the adjacent topographic features located at the same distance while satisfying the altitude information of the electronic device 100, based on a predetermined order of priority, and correct or set the current location of the electronic device 100 from the estimated current location to a location of the selected topographic feature. Herein, the order of priority may be determined according to a user selection or control, may be determined based on a favorite topographic feature and a location history of the user, stored in the memory 110, or may be determined by the sequence of the search of topographic features by the location analyzing module 116. On the other hand, when there is no adjacent topographic feature satisfying the altitude information of the electronic device 100, among the adjacent topographic features present within the predetermined location search range, the location analyzing module 116 extends the location search range by a predetermined distance and searches the map information module 117 for altitude information and location information of adjacent topographic features that are present within the extended location search range.

On the other hand, when the searched location information of the adjacent topographic features is not within the predetermined location search error range, the location analyzing module 116 determines or sets the estimated current location as the current location of the electronic device 100 and transmits a map including a display of the determined current location of the electronic device 100 to the graphic module 113.

The memory unit 110 may further include an additional module or a set of instructions or applications in addition to the above-described modules. Also, in some cases, the memory unit 110 may not use some of the modules or sets of instructions or applications.

In addition, various functions of the electronic device 100 according to the present invention, which have been described above and will be described below, may be implemented by any combination of hardware and/or software including one or more streaming processes and/or an application-specific integrated circuit (ASIC).

The location information collector 180 may be a system or device capable of identifying the current location of the electronic device 100. For example, the location information collector 180 collects current location information by using any one of a global positioning system (GPS) and a WiFi positioning system (WPS). The location information collector 180 collects latitude/longitude information of a current location according to a user selection or control and transmits the collected latitude/longitude information of the current location to the location analyzing module 116.

The altimeter 181 collects or measures altitude information of the electronic device 100 and transmits the altitude information to the location analyzing module 116. The altimeter 181 may be an aneroid altimeter that measures an absolute altitude by detecting an air pressure change. However, the altimeter 181 is not limited to an aneroid altimeter, and may be an altimeter using any other known altitude measuring techniques.

In the present invention, it has been described that the location analyzing module 116 collects latitude/longitude information from the location information collector 180, estimates a current location, searches for altitude information of a topographic feature corresponding to the estimated current location, and corrects or sets the current location of the electronic device 100 based on the searched altitude information of the topographic feature and altitude information collected from the altimeter 181. However, according to an alternative embodiment, the functions of the location analyzing module 116 may be performed directly by the processor 122.

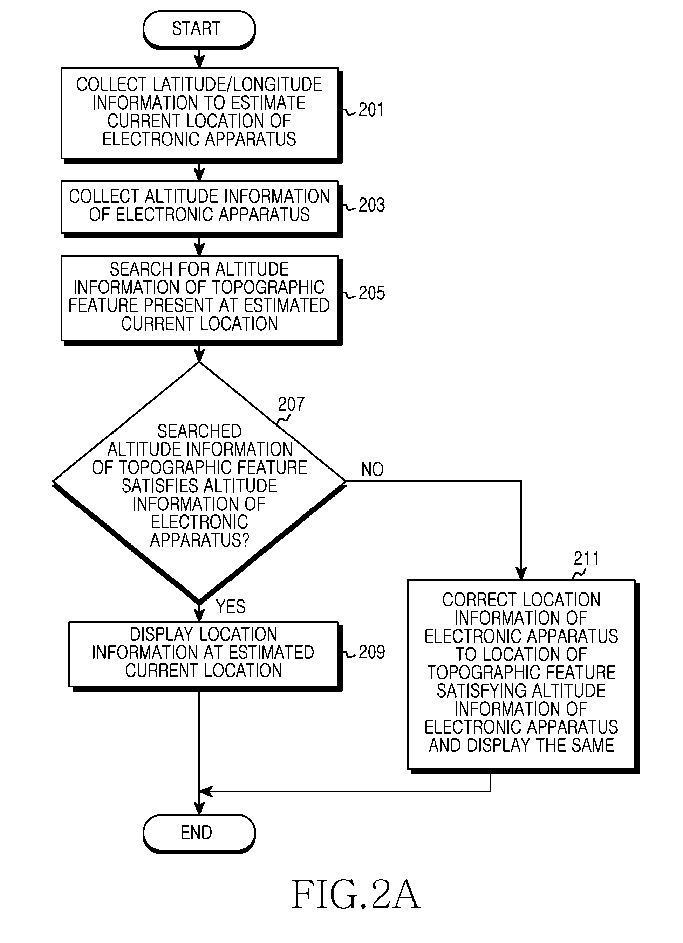

FIG. 2A illustrates a process of providing a location search service in the electronic device 100 according to the exemplary embodiment of the present invention.

Referring to FIG. 2A, in step 201, the electronic device 100 collects latitude/longitude information through the location information collector 180 to estimate a current location of the electronic device 100. In step 203, the electronic device 100 collects altitude information of the electronic device 100 through the altimeter 181. In step 205, the electronic device 100 searches for map information of a topographic feature present at the estimated current location. Herein, the map information of the topographic feature includes altitude information of the topographic feature. For example, the electronic device 100 uses the collected latitude/longitude information to estimate the current location of the electronic device 100 as a point S, and searches for information indicating that the altitude of a building A located at the point S is 10 m.

In step 207, the electronic device 100 determines whether the searched altitude information of the topographic feature satisfies the altitude information of the electronic device 100. For example, when an altitude of the electronic device 100 is 15 m. and a searched altitude of a building is higher than 15 m., because the electronic device 100 can be present in the building, the electronic device 100 determines that the searched altitude of the building satisfies the altitude of the electronic device 100. On the other hand, when an altitude of the electronic device 100 is 15 m. and a searched altitude of a building is lower than 15 m., because the electronic device 100 cannot be present in the building, the electronic device 100 determines that the searched altitude of the building does not satisfy the altitude of the electronic device 100. As another example, when an altitude of the electronic device 100 is -15 m. and a searched altitude of a building is lower than -15 m., because the electronic device 100 can be present in the building, the electronic device 100 determines that the searched altitude of the building satisfies the altitude of the electronic device 100. On the other hand, when an altitude of the electronic device 100 is -15 m. and a searched altitude of a building is higher than -15 m., because the electronic device 100 cannot be present in the building, the electronic device 100 determines that the searched altitude of the building does not satisfy the altitude of the electronic device 100.

When the searched altitude information of the topographic feature is determined to be satisfied as the altitude information of the electronic device 100, the electronic device 100 proceeds to step 209. In step 209, the electronic device 100 determines that the electronic device 100 is located at the estimated current location, determines or sets the estimated current location as the current location of the electronic device 100, and displays a map including a display of the current location on a display screen, such as the touch screen 160. Thereafter, the electronic device 100 ends the method of FIG. 2A according to the exemplary embodiment of the present invention.

On the other hand, when the searched altitude information of the topographic feature is not determined in step 207 to be satisfied as the altitude information of the electronic device 100, the electronic device 100 proceeds to step 211. In step 211, the electronic device 100 corrects or sets the location information of the electronic device 100 to the location of an adjacent topographic feature satisfying the altitude information of the electronic device 100, and displays the corrected location information. Specifically, when the searched altitude information of the topographic feature does not satisfy the altitude information of the electronic device 100 in step 207, the electronic device 100 performs step 211 by which the electronic device 100 searches for an adjacent topographic feature satisfying the altitude information of the electronic device 100, determines or sets a location of the searched adjacent topographic feature as a current location of the electronic device 100, displays a map including a display of the current location on a display screen, such as the touch screen 160, and then ends the method of FIG. 2A according to the exemplary embodiment of the present invention. Herein, the current location of the electronic device 100 may be output as a voice signal.

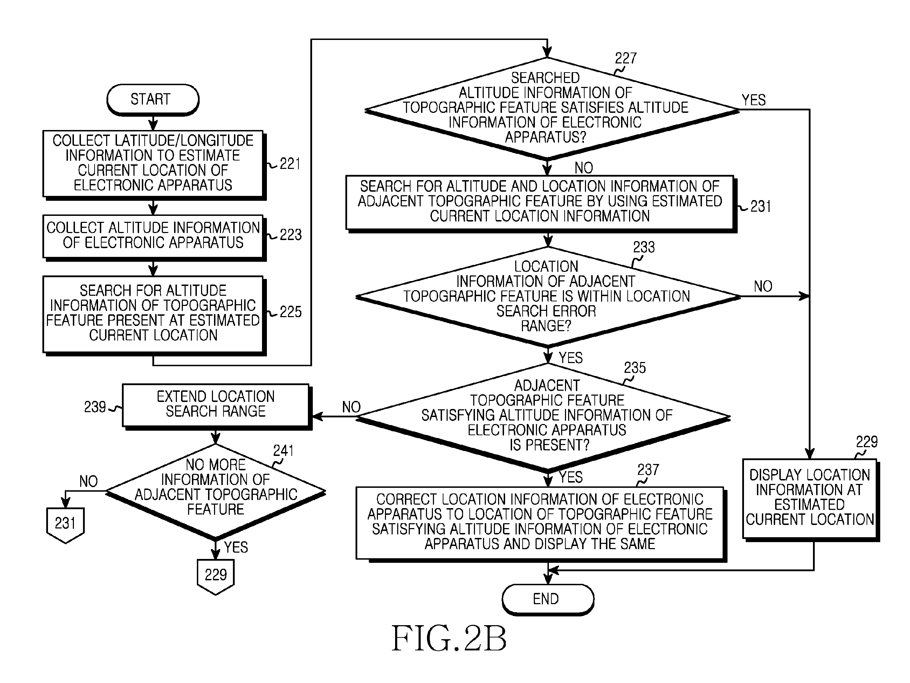

FIG. 2B illustrates a process of providing the location search service in the electronic device 100 according to an alternative exemplary embodiment of the present invention.

Referring to FIG. 2B, in step 221, the electronic device 100 collects latitude/longitude information through the location information collector 180 to estimate a current location of the electronic device 100. In step 223, the electronic device 100 collects altitude information of the electronic device 100 through the altimeter 181. In step 225, the electronic device 100 searches for altitude information of a topographic feature present at the estimated current location. In step 227, the electronic device 100 determines whether the searched altitude information of the topographic feature satisfies the altitude information of the electronic device 100. For example, when an altitude of the electronic device 100 is 15 m. and a searched altitude of a building is higher than 15 m., because the electronic device 100 can be present in the building, the electronic device 100 determines that the searched altitude of the building satisfies the altitude of the electronic device 100.

On the other hand, when an altitude of the electronic device 100 is 15 m. and a searched altitude of a building is lower than 15 m., because the electronic device 100 cannot be present in the building, the electronic device 100 determines that the searched altitude of the building does not satisfy the altitude of the electronic device 100. As another example, when an altitude of the electronic device 100 is -15 m. and a searched altitude of a building is lower than -15 m., because the electronic device 100 can be present in the building, the electronic device 100 determines that the searched altitude of the building satisfies the altitude of the electronic device 100. On the other hand, when an altitude of the electronic device 100 is -15 m. and a searched altitude of a building is higher than -15 m., because the electronic device 100 cannot be present in the building, the electronic device 100 determines that the searched altitude of the building does not satisfy the altitude of the electronic device 100.

When the searched altitude information of the topographic feature is determined to be satisfied as the altitude information of the electronic device 100, the electronic device 100 proceeds to step 229. In step 229, the electronic device 100 determines that the electronic device 100 is located at the estimated current location, determines or sets the estimated current location as the current location of the electronic device 100, and displays a map including a display of the current location on a display screen, such as the touch screen 160. Thereafter, the electronic device 100 ends the method of FIG. 2B according to the alternative exemplary embodiment of the present invention.

On the other hand, in step 227, when the searched altitude information of the topographic feature is determined to not be satisfied as the altitude information of the electronic device 100, the electronic device 100 proceeds to step 231. In step 231, the electronic device 100 searches for altitude information and location information of adjacent topographic features that are present within a predetermined location search range from the estimated current location. Herein, the predetermined location search range may be set by a user selection or control or may be pre-stored in the electronic device 100. For example, when an altitude of the electronic device 100 is 10 m. and an searched altitude of a building is 5 m., because the searched altitude of the building does not satisfy the altitude of the electronic device 100, the electronic device 100 searches for altitude information and location information of adjacent topographic features that are present within a radius of 5 m. from the current location of the electronic device 100. In step 233, the electronic device 100 determines whether the searched location information of the adjacent topographic features is within a predetermined location search error range.

When the searched location information of the adjacent topographic features is not within the predetermined location search error range, the electronic device 100 displays a map including a display of the estimated current location on a display screen in step 229, such as the touch screen 160, and then ends the method of FIG. 2B according to the alternative exemplary embodiment of the present invention. Specifically, when determining that the location information of adjacent topographic features obtained by extending the location search range is not within the predetermined location search error range, the electronic device 100 determines or sets the estimated current location as a current location of the electronic device 100, displays a map including a display of the current location on a display screen, such as the touch screen 160, and then ends the method of FIG. 2B according to the alternative exemplary embodiment of the present invention.

On the other hand, in step 233, if the location of the adjacent topographic features is within the predetermined location search error range, the electronic device 100 proceeds to step 235. In step 235, the electronic device 100 determines whether an adjacent topographic feature satisfying the altitude information of the electronic device 100 is present within the location search range.

When an adjacent topographic feature, determined to be satisfied as the altitude information of the electronic device 100, is located within the location search range, the electronic device 100 proceeds to step 237. In step 237, the electronic device 100 determines that the electronic device 100 is located at the adjacent topographic feature satisfying the altitude information of the electronic device 100, corrects or sets the location of the electronic device 100 to the location of the adjacent topographic feature satisfying the altitude information of the electronic device 100, and displays a map including a display of the corrected location on a display screen, such as the touch screen 160.

Thereafter, the electronic device 100 ends the method of FIG. 2B according to the alternative exemplary embodiment of the present invention. For example, when an altitude of the electronic device 100 is 10 m. and an altitude of a building estimated as the current location is 5 m., the altitude of the building estimated as the current location does not satisfy the altitude of the electronic device 100. In this case, the electronic device 100 searches for adjacent topographic features that are located within a radius of 5 m. from the estimated current location. When there is an adjacent topographic feature with an altitude of 5 m. or more among the searched adjacent topographic features, the electronic device 100 corrects or sets the current location of the electronic device 100 to the location of the adjacent topographic feature with an altitude of 5 m. or more and display a map including a display of the corrected location on a display screen, such as the touch screen 160.

On the other hand, in step 235, when an adjacent topographic feature, determined to be satisfied as the altitude information of the electronic device 100, is not located within the location search range, the electronic device 100 proceeds to step 239. In step 239, the electronic device 100 extends the location search range by a predetermined distance. In step 241, the electronic device 100 determines whether an adjacent topographic feature is located within the extended location search range.

When an adjacent topographic feature is not present within the extended location search range in step 241, the electronic device 100 determines whether there are no more adjacent topographic features satisfying the altitude information of the electronic device 100. In step 241, if there are no more adjacent topographic features, the method proceeds to step 229, and the electronic device 100 determines or sets the estimated current location as the current location of the electronic device 100, displays a map including a display of the current location on a display screen, such as the touch screen 160. Thereafter, the electronic device 100 ends the method of FIG. 2B according to the alternative exemplary embodiment of the present invention.

On the other hand, in step 241, when an adjacent topographic feature is present within the extended location search range, the electronic device 100 returns to step 231 and performs the subsequent steps.

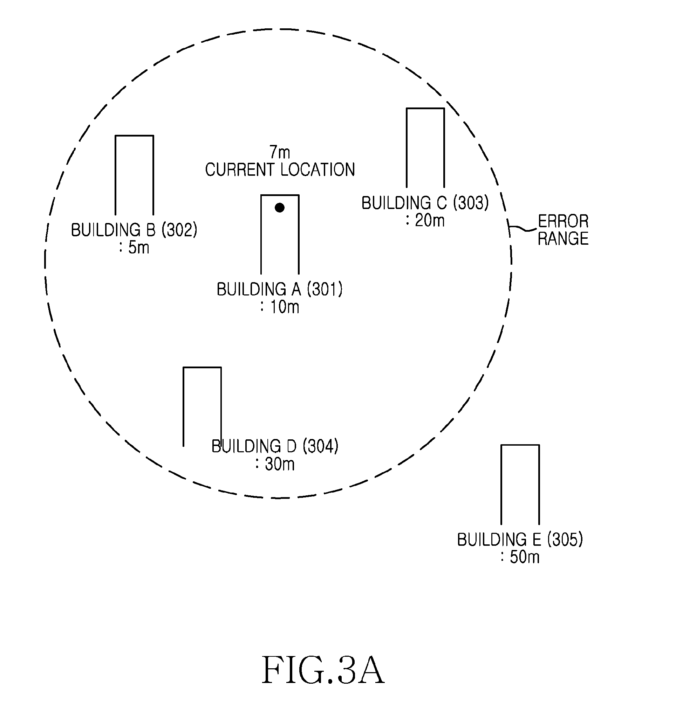

FIGS. 3A to 3C illustrate a method of determining or setting a current location of the electronic device 100 by using altitude information according to the exemplary embodiment of the present invention.

Referring to FIG. 3A, when an altitude of the electronic device 100 is 7 m. and an altitude of a building A 301 estimated as the current location of the electronic device 100 is 10 m., the electronic device 100 can be present within the building A 301 estimated as the current location. Thus, the electronic device 100 determines or sets the location of the building A 301 estimated as the current location as the current location of the electronic device 100, and displays a map as shown in FIG. 3A including a display of the current location on a display screen, such as the touch screen 160.

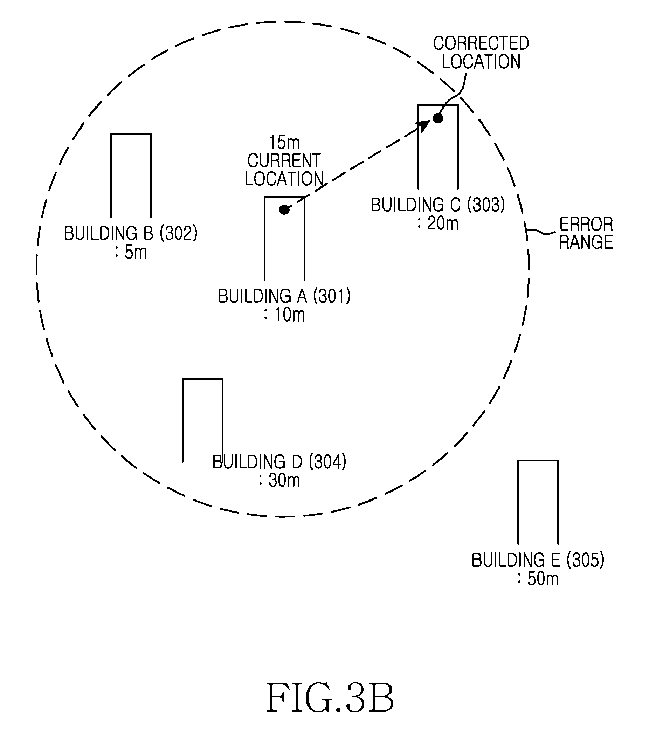

Referring to FIG. 3B, when an altitude of the electronic device 100 is 15 m. and an altitude of a building A 301 estimated as the current location of the electronic device 100 is 10 m., the electronic device 100 cannot be present within the building A 301 estimated as the current location. Thus, the electronic device 100 determines whether an adjacent topographic feature satisfying the altitude of the electronic device 100 is present among the adjacent topographic features present within a predetermined radius from the current location. Then, the electronic device 100 acquires information indicating that, a building C 303 with an altitude of 20 m., and a building D 304 with an altitude of 30 m. are present in an adjacent area, selects the building C 303 that is closer than the building D 304 to the building A 301, corrects or sets the current location of the electronic device 100 to the location of the building C 303, and displays a map, as shown in FIG. 3B, including a display of the corrected location on a display screen, such as the touch screen 160.

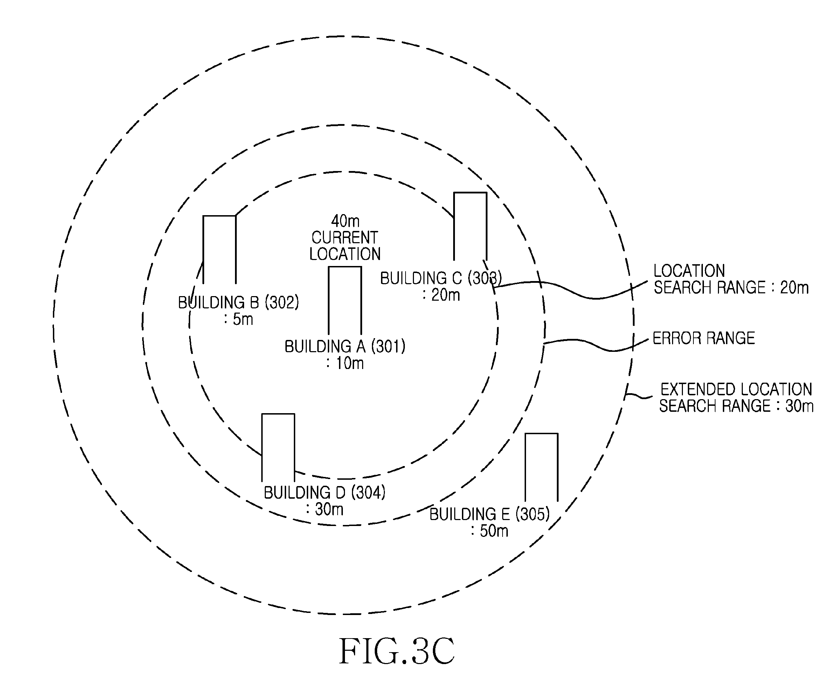

Referring to FIG. 3C, when an altitude of the electronic device 100 is 40 m. and an altitude of a building A 301 estimated as the current location is 10 m., the electronic device 100 cannot be present within the building A 301 estimated as the current location. Thus, the electronic device 100 determines whether an adjacent topographic feature satisfying the altitude of the electronic device 100 is present among the adjacent topographic features present within a radius 20 m. Then, the electronic device 100 acquires information indicating that there is no adjacent topographic feature with an altitude of 40 m. or more, extends the location search range to have a radius of 30 m., and determines whether a topographic feature satisfying the altitude of the electronic device 100 is present within the radius of 30 m. A building E 305 with an altitude of 50 m. is present, but the building E 305 is not present within the location search error range.

Therefore, the building E 305 cannot be the current location of the electronic device 100. Thus, the electronic device 100 determines or sets the initially estimated current location as the current location of the electronic device 100, and displays a map including a display of the current location on a display screen, such as the touch screen 160. Then, the electronic device 100 may select a topographic feature that is closest to the altitude 40 m. of the electronic device 100 among the topographic features present within the location search error range, determine the location of the selected topographic feature as the current location of the electronic device 100, and display a map including a display of the current location on a display screen, such as the touch screen 160.

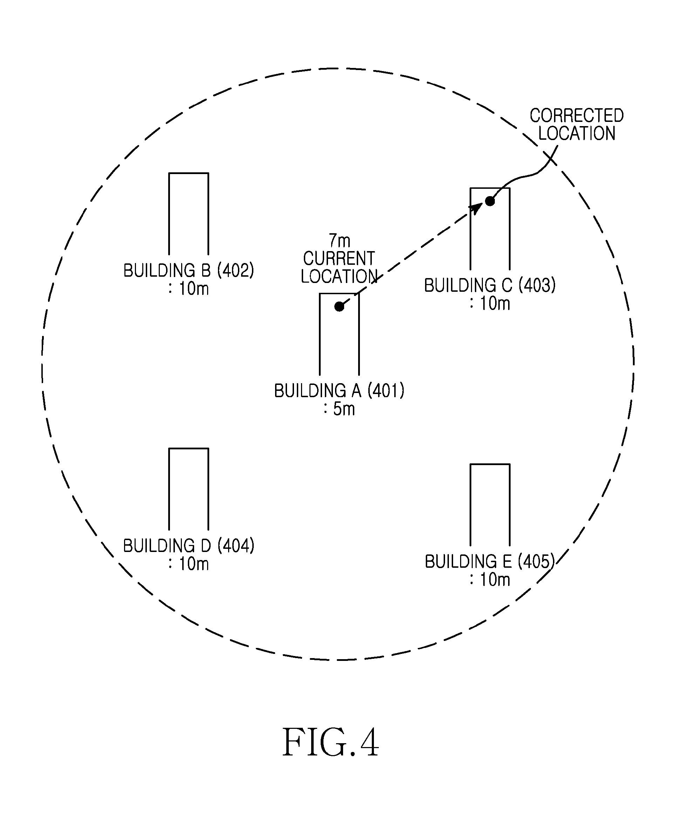

FIG. 4 illustrates a method of determining or setting the current location of the electronic device 100 by using an order of priority according to the alternative exemplary embodiment of the present invention.

Referring to FIG. 4, when an altitude of the electronic device 100 is 7 m. and an altitude of a building A 401 estimated as the current location is 5 m., the electronic device 100 cannot be present within the building A 401 estimated as the current location. Thus, the electronic device 100 determines whether an adjacent topographic feature satisfying the altitude of the electronic device 100 is present among the adjacent topographic features present within a radius 20 m. When determining that a building B 402, a building C 403, a building D 404 and a building E 405, satisfying the altitude of the electronic device 100, are present among the adjacent topographic features, the electronic device 100 determines or sets a building that is closest to the building A 401 estimated as the current location among the building B 402, the building C 403, the building D 404 and the building E 405. When determining that the building B 402, the building C 403, the building D 404 and the building E 405 are at the same distance from the building A 401 estimated as the current location, the electronic device 100 selects the building C 403 according to a predetermined order of priority, corrects or sets the current location of the electronic device 100, and displays a map, as shown in FIG. 4, including a display of the corrected location on a display screen, such as the touch screen 160. Herein, the order of priority may be determined according to a user selection or control, may be determined by a favorite topographic feature and a location history of the user, stored in the memory 110, or may be determined by the sequence of the search of topographic features by the electronic device 100.

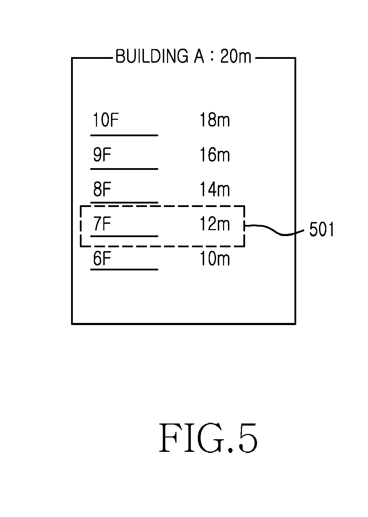

FIG. 5 illustrates a method of determining a current floor of the electronic device 100 in a building by using altitude information according to the alternative exemplary embodiment of the present invention.

Referring to FIG. 5, when an altitude of the electronic device 100 is 12 m. and an altitude of a building A estimated as the current location is 20 m., because the altitude of the building A satisfies the altitude of the electronic device 100, the electronic device 100 is present within the building A. When a topographic feature satisfying the altitude of the electronic device 100 is a building as described above, the electronic device 100 searches the map information for floor-by-floor information of the building A, determines that the altitude 12 m. of the electronic device 100 corresponds to the second floor 501 of the building A, and displays a map including current floor-by-floor location information of the electronic device 100 and a display of the current location on a display screen, such as the touch screen 160.

The methods according to the exemplary embodiments described in the claims and/or specification of the present invention may be implemented by hardware, software, or a combination thereof.

When the methods are implemented by software, a computer-readable storage medium may be provided to store one or more programs, applications, and/or software modules. The one or more programs stored in the computer-readable storage medium may be configured for execution by one or more processors in the electronic device 100. The one or more programs may include instructions for causing the electronic device 100 to execute the methods according to the exemplary embodiments described in the claims and/or specification of the present invention.

These programs, applications, and/or software modules or software may be stored in random access memories (RAMs), nonvolatile memories including flash memories, read only memories (ROMs), electrically erasable programmable ROMs (EEPROMs), magnetic disc storage devices, compact disc-ROMs (CD-ROMs), digital versatile discs (DVDs), other types of optical storage devices, or magnetic cassettes. Also, the programs may be stored in a memory configured by a combination of some or all of such storage devices. Also, multiple memories 110 may be provided.

Also, the programs may be stored in an attachable and/or detachable storage device that can be accessed by the electronic device 100 through a communication network such as the Internet, an Intranet, a local area network (LAN), a wireless LAN (WLAN), or a storage area network (SAN), or through a communication network configured by a combination thereof. This storage device may be accessed by the electronic device 100 through an external port and/or or by other known methods, such as wired and/or wireless connections and other known communication interfaces.

Also, a separate storage device on a communication network may be accessed by a portable electronic device as the electronic device 100.

The above-described apparatus and methods according to the present invention can be implemented in hardware, firmware or as software or computer code that can be stored in a non-transitory recording medium such as a CD ROM, a RAM, a ROM, a floppy disk, DVDs, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any media such as communication signals transmitted by wire/wireless connections, and their equivalents.

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. A method for performing a location search in an electronic device, comprising:
estimating a current location of the electronic device;
measuring an altitude of the electronic device;
searching for an altitude of a topographic feature corresponding to the estimated current location;
comparing the searched altitude and the measured altitude to determine whether the electronic device is located at the topographic feature; and
setting the current location of the electronic device according to the determination result.

2. The method of claim 1, wherein setting the current location of the electronic device comprises:
when it is determined that the electronic device is not located at the topographic feature, searching for an adjacent topographic feature in which the electronic device is locatable; and
setting a location of the searched adjacent topographic feature as the current location of the electronic device.

3. The method of claim 2, wherein searching for the adjacent topographic feature in which the electronic device is locatable comprises:
searching for an adjacent topographic feature that is present within a predetermined radius from the current location of the electronic device; and
comparing an altitude of the searched adjacent topographic feature and the altitude of the electronic device to determine whether there is an adjacent topographic feature in which the electronic device is locatable.

4. The method of claim 3, further comprising setting the estimated current location as the current location of the electronic device, when it is determined that there is no adjacent topographic feature at which the electronic device is locatable.

5. The method of claim 2, wherein setting the location of the searched adjacent topographic feature as the current location of the electronic device comprises, when there are a plurality of topographic features at which the electronic device is locatable, setting a location of the topographic feature that is closest to the estimated current location among the plurality of topographic features as the current location of the electronic device.

6. The method of claim 2, wherein setting the location of the searched adjacent topographic feature as the current location of the electronic device comprises, when a plurality of topographic features at which the electronic device is locatable are present at the same distance, setting a location of the topographic feature with the highest priority as the current location of the electronic device.

7. The method of claim 2, further comprising:
when an adjacent building is searched as a result of the searching for an adjacent topographic feature at which the electronic device is locatable, determining a floor of the adjacent building in which the electronic device is located; and
setting the determined floor of the adjacent building as the current location of the electronic device.

8. The method of claim 1, wherein setting the current location of the electronic device comprises, when it is determined that the electronic device is located at the topographic feature, setting the estimated current location as the current location of the electronic device.

9. The method of claim 1, wherein measuring the altitude of the electronic device comprises measuring the altitude of the electronic device by using an altimeter provided separate from the electronic device.

10. The method of claim 1, further comprising displaying the determined location of the electronic device.

11. An electronic device for performing a location search, comprising:
a processor;
a memory unit; and
a software module stored in the memory unit and executed by processor,
wherein the software module estimates a current location of the electronic device, measures altitude information of the electronic device, searches for altitude information of a topographic feature corresponding to the estimated current location, compares the searched altitude information and the measured altitude information to determine whether the electronic device is located at the topographic feature, and sets the current location of the electronic device according to the determination result.

12. The device of claim 11, wherein the software module comprises an instruction for searching for an adjacent topographic feature at which the electronic device is locatable, when it is determined that the electronic device is not located at the topographic feature, and setting a location of the searched adjacent topographic feature as the current location of the electronic device.

13. The device of claim 12, wherein the software module comprises an instruction for searching for an adjacent topographic feature that is present within a predetermined radius from the current location of the electronic device, when it is determined that the electronic device is not located at the topographic feature, and comparing an altitude of the searched adjacent topographic feature and the altitude of the electronic device to determine whether there is an adjacent topographic feature at which the electronic device is locatable.

14. The device of claim 13, wherein the software module comprises an instruction for setting the estimated current location as the current location of the electronic device, when it is determined that there is no adjacent topographic feature at which the electronic device is locatable.

15. The apparatus of claim 11, wherein the apparatus arranged to implement a method of one of claims 5 to 10.
